# FASCICULE DE BREVET EUROPEEN

(11) **EP 0 538 107 B1**
(45) Date de publication et mention de la délivrance du brevet: **08.02.1995**
(21) Numéro de dépôt: 92402774.1
(22) Date de dépôt: 09.10.1992
(51) Int. Cl.: B64F 5/00, B65D 81/02

(54) **Container destiné au transport de sièges éjectables**
Behälter zum Transport von Schleudersitzen
Container for transporting an ejector seat

(30) Priorité: 15.10.1991 FR 9112702
(43) Date de publication de la demande: 21.04.1993
(73) Titulaire: Daouk, Antar, F-75016 Paris (FR)
(72) Inventeur: Daouk, Antar, F-75016 Paris (FR)
(74) Mandataire: Chameroy, Claude

(56) Documents cités:
- EP-A- 0 107 348
- US-A- 4 735 310

## Description

La présente invention concerne un container de transport destiné notamment au transport de charges à manipuler avec précaution, telles que des sièges éjectables pour aéronefs, ce container comprenant deux éléments d'enveloppe adaptables l'un sur l'autre pour définir l'espace de rangement de la charge à transporter.

On connaît des containers de ce type qui sont utilisés dans l'aéronautique, pour le transport de sièges éjectables, du lieu de fabrication au site de montage à l'intérieur des cockpits d'avions.

Ces sièges éjectables étant fixés en état de fonctionnement sur leur bâti de montage, leur mise en place et leur extraction dans et hors du container imposent des manoeuvres délicates, contraignantes et dangereuses, ce qui accroît la durée d'exécution, renchérit le coût du chargement et du déchargement, et expose le personnel à des risques d'accidents.

En outre, le document US-A-4 735 310 montre un container de transport destiné notamment au transport de moteurs, ce container comprenant deux éléments d'enveloppe adaptables l'un sur l'autre pour définir l'espace de rangement de la charge à transporter.

Les mêmes problèmes se posent avec toute autre charge à manipuler avec précaution ou avec des charges lourdes ou de grandes dimensions.

La présente invention a pour but de remédier à ces inconvénients et, pour ce faire, elle vise un container, du type spécifié en introduction, qui se caractérise en ce qu'il comporte, à l'intérieur de son espace de rangement, au moins un berceau de support de la charge, articulé par une extrémité sur un châssis solidaire de le base d'un premier élément d'enveloppe, pour pouvoir être déplacé entre une position couchée sur ledit châssis et une position redressée au-dessus de celui-ci après retrait du second élément d'enveloppe, des moyens d'immobilisation du berceau de support en position redressée étant en outre prévus.

Ainsi, d'une part, la charge, en place dans le premier élément d'enveloppe, peut être amenée en position redressée, au moins en grande partie hors de ce dernier, ce qui facilite son enlèvement car elle est plus accessible et se trouve sensiblement à hauteur d'homme ; d'autre part, il est aisé de présenter une charge pour la fixer sur le berceau de support mis en position redressée, la charge pouvant ensuite être facilement posée à l'intérieur du premier élément d'enveloppe par déplacement du berceau vers sa position couchée.

Selon un mode de réalisation simple de conception, les moyens d'immobilisation comprennent au moins une béquille repliable et verrouillable, articulée d'un côté sur le châssis et de l'autre au berceau de support, en un point éloigné de son extrémité articulée.

De préférence, deux vérins auto-extensibles sont en outre prévus, chacun interposé entre le châssis et un flanc respectif du berceau de support, à proximité de l'extrémité articulée de ce dernier.

La présence de ces vérins facilite la remontée de la charge depuis la position couchée du berceau, et amortit la descente de ladite charge depuis la position redressée dudit berceau.

De préférence, il est prévu, sur le châssis, un secteur cranté centré sur l'articulation berceau-châssis, coopérant avec un cliquet débrayable monté sur le berceau, pour permettre de relever et d'abaisser pas-à-pas le berceau de support chargé, et prévenir ainsi le risque d'une chute brutale de ce dernier avant son immobilisation en position redressée ou couchée.

Avantageusement, le berceau de support porte une poignée mobile de débrayage du cliquet, reliée à celui-ci par un câble et placée à proximité d'une poignée de manoeuvre fixée sur l'extrémité libre du berceau de support. La poignée de débrayage du cliquet peut ainsi être actionnée facilement par l'opérateur tenant en mains la poignée fixe de manoeuvre lors de la manipulation du berceau de support.

Selon une autre caractéristique de l'invention, le container est muni de moyens de verrouillage du berceau de support en position couchée sur le châssis.

Ceci permet de stabiliser la charge elle-même attachée au berceau durant le transport du container.

Selon un mode de réalisation préféré de l'invention, le châssis est constitué de deux rails sensiblement parallèles entre lesquels s'articule le berceau de support, lequel comporte, sur chacun de ses flancs, un fer en U ouvert en direction d'un rail respectif du châssis, pour l'embrasser dans la position couchée du berceau de support, et les moyens de verrouillage de ce dernier consistent en des goupilles chacune destinée à retenir un fer en U respectif à cheval sur le rail correspondant.

Ainsi le verrouillage du berceau support de charge peut être effectué très simplement sur le châssis.

Pour la fixation de la charge sur le berceau de support, celui-ci comprend avantageusement, à l'une au moins de ses extrémités, une griffe de serrage libérable destinée à coopérer avec une partie saillante de la charge.

Selon une caractéristique complémentaire de l'invention, le berceau de support est muni, sur sa face de réception de la charge, de taquets servant à immobiliser provisoirement cette dernière avant le serrage ou après le desserrage des griffes.

De préférence, la hauteur du premier élément d'enveloppe est inférieure à celle du second élément d'enveloppe. Ainsi, les charges sont très faciles à saisir ou à mettre en place et les efforts sont réduits au minimum.

Un mode de réalisation de l'invention est décrit ci-après en référence aux dessins annexés dans lesquels :
- la figure 1 représente une vue d'ensemble d'un container avec son berceau en position redressée ;
- la figure 2 est une vue de côté du container avec arrachement partiel, le berceau étant en position intermédiaire entre la position couchée et la position redressée ;
- la figure 3 représente une vue en perspective à échelle agrandie, le berceau étant en position redressée ; et
- la figure 4 est une vue de dessus du berceau en position couchée reposant sur le châssis.

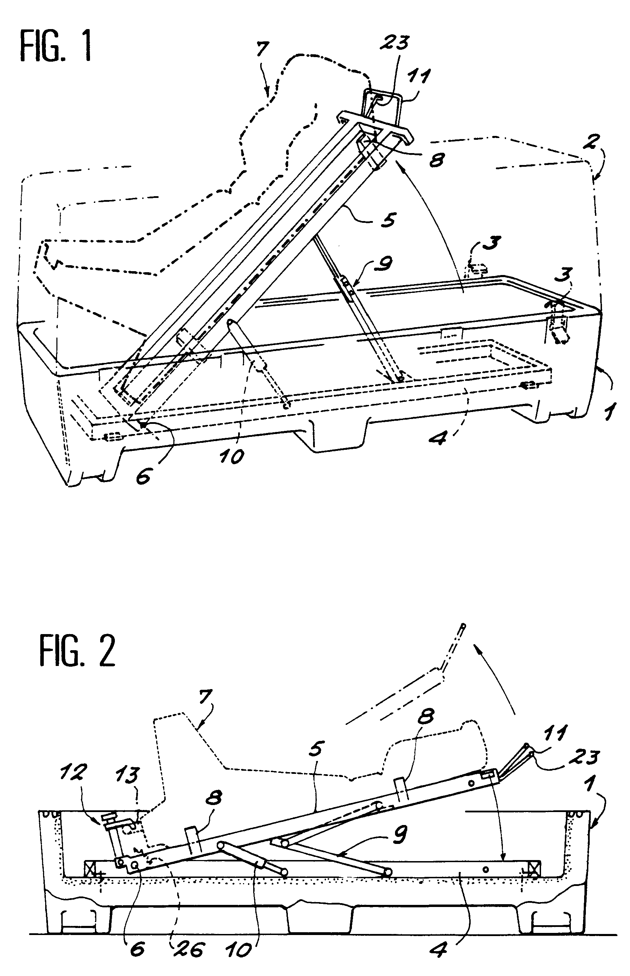

La figure 1 représente un container comprenant un premier élément d'enveloppe 1 en traits pleins d'environ 40 centimètres de hauteur et un second élément d'enveloppe 2 d'environ 1 mètre de hauteur, dessiné partiellement en traits mixtes.

Pendant le transport, les deux éléments d'enveloppe 1, 2 sont verrouillés l'un sur l'autre de manière connue au moyen par exemple d'attaches 3.

A l'intérieur de l'élément d'enveloppe inférieur 1 est fixé un châssis 4 rectangulaire représenté partiellement en traits pointillés.

Sur le châssis est articulé un berceau 5 de forme générale rectangulaire dont l'articulation 6 est située au voisinage de l'un des petits côtés du châssis.

Sur le berceau, repose une charge 7 et l'on a ici représenté schématiquement un siège éjectable d'avion. Ce siège est maintenu en position notamment grâce à des taquets 8 soudés sur le berceau, qui s'engagent librement dans des renfoncements du dos du siège.

En un point éloigné de l'articulation châssis-berceau est fixée une béquille repliable et verrouillable 9 articulée elle-même d'un côté sur le châssis et de l'autre côté au dos du berceau. La béquille 9, une fois verrouillée, immobilise le berceau dans la position redressée. Des vérins auto-extensibles 10, interposés entre le châssis et un flanc respectif du berceau, sont disposés entre le point d'articulation châssis-berceau et le point d'articulation béquille-châssis.

Une poignée de manoeuvre 11 est fixée sur le petit côté du berceau opposé à l'articulation berceau-châssis.

On retrouve sur la figure 2 les principaux éléments constitutifs décrits précédemment.

Sur cette figure, le berceau 5 est représenté dans une position intermédiaire entre la position couchée et la position relevée.

On voit en outre qu'une griffe de serrage 12 est fixée sur le berceau à l'extrémité située au voisinage de l'articulation berceau-châssis, cette griffe de serrage étant libérable et coopérant avec une partie saillante 13 d'extrémité du siège éjectable.

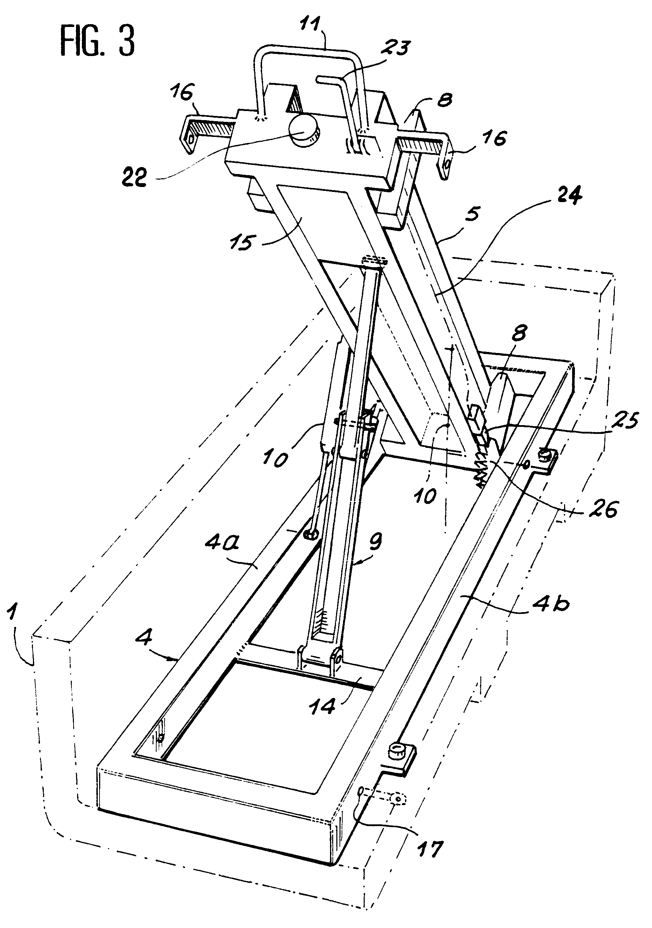

Sur la figure 3, on voit le châssis 4 boulonné sur le fond de l'élément d'enveloppe inférieur 1 du container. Le châssis est constitué de tubes de section carrée, deux d'entre eux définissant des rails latéraux longitudinaux 4a, 4b, entre lesquels le berceau s'articule par l'une de ses extrémités. Le berceau 5 est également constitué de tubes métalliques et présente des dimensions inférieures aux dimensions du châssis, pour venir s'emboîter dans ce dernier en position couchée.

Sur le châssis est soudée une barre 14 qui vient s'appuyer sur les deux faces internes des rails 4a, 4b dudit châssis. Sur la barre est articulée une branche de la béquille repliable 9 dont l'autre branche s'articule sur une plaque 15 au dos du berceau. Environ à mi-distance entre l'articulation châssis-berceau 6 et la barre 14, est articulé à l'intérieur de chaque rail 4a, 4b du châssis une extrémité d'un vérin auto-extensible respectif 10 dont l'autre extrémité s'articule sur la partie externe des flancs du berceau.

Une poignée mobile 23 est fixée sur le petit côté libre du berceau 5, à proximité et en dessous de la poignée de manoeuvre 11 ; elle est reliée par un câble 24 à un cliquet débrayable 25 mis en place sur le berceau, lequel cliquet coopère avec un secteur cranté 26 solidaire du châssis et centré sur l'axe d'articulation 6 du berceau.

La poignée 11, soudée à l'extrémité libre du berceau, permet de manoeuvrer celui-ci soit vers la position relevée soit vers la position repliée. Dans cette dernière position, le berceau 5 peut être couché et immobilisé sur le châssis 4 au moyen de deux fers en U 16 soudés de part et d'autre de son extrémité libre ; chacun de ces fers en U 16 est ouvert en direction d'un rail latéral respectif 4a ou 4b du châssis et peut être verrouillé sur celui-ci au moyen d'une goupille 17 passant dans les perforations ménagées dans l'aile extérieure du fer en U 16 et dans le rail 4a ou 4b.

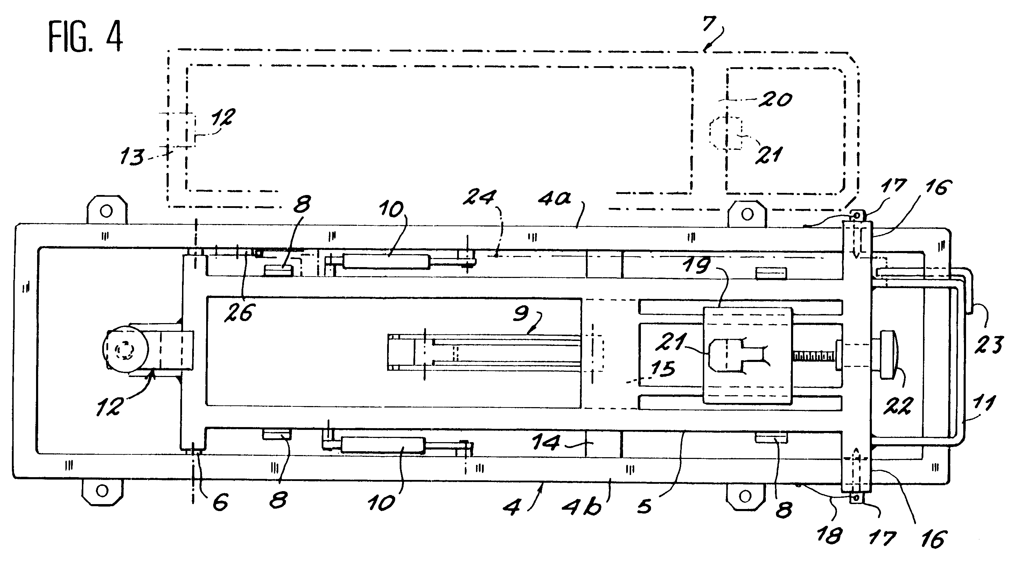

Le berceau ainsi mis en position couchée et verrouillée à l'intérieur du châssis est représenté sur la figure 4. On retrouve sur cette figure, à l'extrémité articulée du berceau 6, la griffe de serrage 12 qui vient coopérer avec la partie saillante 13 d'extrémité du siège éjectable dont seul le dos a été représenté en traits mixtes et placé, pour les commodités de la lecture, à côté du dessin du berceau. A l'autre extrémité du berceau, c'est-à-dire à l'extrémité libre, on voit un dispositif 19 qui permet de fixer la partie d'extrémité opposée 20 du dos du siège éjectable au moyen d'une autre griffe de serrage 21 réglable longitudinalement par une vis 22 visible également sur la figure 3. Ceci permet de fixer les sièges éjectables de tailles différentes sur le berceau.

Le container qui vient d'être décrit est utilisé de la manière suivante : on suppose dans un premier temps que le siège éjectable 7 représenté schématiquement en traits mixtes à la figure 4, est en position sur le berceau 5, lequel est verrouillé sur le châssis 4 à l'intérieur du container. La partie supérieure 2 du container ayant été otée, il suffit de retirer les goupilles 17 de verrouillage du berceau, puis au moyen de la poignée 11 de soulever soit manuellement soit mécaniquement le berceau pour l'amener de la position repliée à la position redressée représentée à la figure 1 ou à la figure 3, en passant par des positions intermédiaires telles que celle illustrée par la figure 2. Pendant la remontée du berceau, facilitée par l'action des vérins auto-extensibles, le cliquet 25 s'engage successivement dans chacun des crans du secteur 26, de sorte que toute descente accidentelle du berceau est empêchée, le débrayage du cliquet 25 ne pouvant s'effectuer que par suite d'une pression exercée sur la poignée 23. Le berceau étant en position redressée, il suffit alors d'immobiliser la béquille repliable 9 dans sa position dépliée au moyen, par exemple d'une goupille insérée au voisinage de l'axe de pliage de la béquille, et l'on peut alors enlever la charge, après avoir desserré les griffes 12, 21.

La manoeuvre inverse s'effectue de la manière suivante : le siège éjectable ayant été mis en place entre les taquets, les griffes de serrage 12,21 présentes aux extrémités du berceau sont actionnées et le siège éjectable est ainsi arrimé sur le berceau. On procède alors au déverrouillage de la béquille repliable, puis on actionne la poignée de débrayage 23 pour éloigner le cliquet 25 du secteur 26 et on laisse descendre progressivement le berceau qui pivote autour de son articulation 6, les vérins exerçant une action d'amortissement de la descente, qui peut être par ailleurs contrôlée grâce à la poignée 11 retenue soit manuellement soit mécaniquement. Par mesure de sécurité, on peut également opérer la descente du berceau 5 pas-à-pas en actionnant par intermittence seulement la poignée de débrayage 23. Lorsque le berceau a atteint la position couchée, les fers en U 16 se sont engagés sur les traverses respectives du châssis et l'on peut alors opérer le verrouillage du berceau sur le châssis au moyen des goupilles 17 prévues à cet effet.

La présente invention permet de répondre aux problèmes posés lors de la mise en place ou au contraire l'extraction des sièges éjectables destinés à être transportés dans des containers.

La présente description est un exemple non limitatif de l'invention de la demanderesse, dont les applications ne sont pas limitées aux sièges électables, mais peuvent s'étendre au transport de n'importe quelle autre charge difficile à manipuler.

## Revendications

1. Container de transport destiné notamment au transport de charges à manipuler avec précaution, telles que des sièges éjectables pour aéronefs, ce container comprenant deux éléments d'enveloppe (1,2) adaptables l'un sur l'autre pour définir l'espace de rangement de la charge à transporter, et étant caractérisé en ce qu'il comporte, à l'intérieur dudit espace de rangement, au moins un berceau (5) de support de la charge, articulé par une extrémité sur un châssis (4) solidaire de la base d'un premier élément d'enveloppe (1), pour pouvoir être déplacé entre une position couchée sur ledit châssis et une position redressée au-dessus de celui-ci après retrait du second élément d'enveloppe (2), des moyens d'immobilisation du berceau de support en position redressée étant en outre prévus.

2. Container selon la revendication 1, caractérisé en ce que lesdits moyens d'immobilisation comprennent au moins une béquille (9) repliable et verrouillable, articulée d'un côté sur le châssis et de l'autre au berceau de support (5), en un point éloigné de son extrémité articulée.

3. Container selon la revendication 2, caractérisé en ce que deux vérins (10) auto-extensibles sont en outre prévus, chacun interposé entre le châssis et un flanc respectif du berceau de support, à proximité de l'extrémité articulée de ce dernier.

4. Container selon l'une quelconque des revendications 1 à 3, caractérisé en ce qu'il est prévu, sur le châssis, un secteur cranté (26) centré sur l'articulation berceau-châssis (6), coopérant avec un cliquet débrayable (25) monté sur le berceau.

5. Container selon la revendication 4, caractérisé en ce que le berceau de support (5) porte une poignée mobile (23) de débrayage du cliquet (25) reliée à celui-ci par un câble (24) et placée à proximité d'une poignée de manoeuvre (11) fixée sur l'extrémité libre du berceau de support.

6. Container selon l'une quelconque des revendications 1 à 5, caractérisé en ce qu'il est muni de moyens de verrouillage du berceau de support en position couchée sur le châssis.

7. Container selon la revendication 6, caractérisé en ce que le châssis (4) comprend deux rails sensiblement parallèles (4) entre lesquels s'articule le berceau de support, lequel comporte, sur chacun de ses flancs, un fer en U (16) ouvert en direction d'un rail respectif (4a, 4b) du châssis, pour l'embrasser dans la position couchée du berceau de support, et les moyens de verrouillage de ce dernier consistent en des goupilles (17) chacune destinée à retenir un fer en U respectif à cheval sur le rail correspondant.

8. Container selon l'une quelconque des revendications 1 à 7, caractérisé en ce que son berceau de support comprend, à l'une au moins de ses extrémités, une griffe de serrage (12) libérable destinée à coopérer avec une partie saillante de la charge pour immobiliser cette dernière sur ledit berceau.

9. Container selon l'une quelconque des revendications 1 à 8, caractérisé en ce que le berceau de support (5) est muni de taquets (8) d'immobilisation provisoire de la charge.

10. Container selon l'une quelconque des revendications 1 à 9, caractérisé en ce que la hauteur du premier élément d'enveloppe (1) est nettement inférieure à celle du second élément d'enveloppe (2).

## Claims

1. A container intended in particular for the transporting of loads which are to be handled with care, such as ejectable seats for aircraft, this container comprising two encasing elements (1, 2) which can be fitted one on the other in order to define the storage space of the load to be transported, characterized by the fact that it comprises, within said storage space, at least one cradle (5) for the supporting of the load, articulating at one end on a frame (4) which is secured to the base of a first encasing element (1) in order to be capable of being displaced between a position lying down on said frame and an erect position above the latter, after withdrawal of the second encasing element (2), means for locking the support cradle in an erect position being furthermore provided.

2. A container according to claim 1, characterized by the fact that the said locking means comprise at least one foldable and lockable crutch (9), articulated on one side on the frame and on the other side on the support cradle (5) at a point distant from its articulated end.

3. A container according to claim 2, characterized by the fact that two self-extendable jacks (10) are furthermore provided, each interposed between the frame and the respective side of the support cradle, near the articulated end of the latter.

4. A container according to claim 3, characterized by the fact that on the frame there is provided a notched sector (26) centered on the cradle/frame articulation (6) and cooperating with a releasable pawl (25) mounted on the cradle.

5. A container according to claim 4, characterized by the fact that the support cradle (5) bears a moveable handle (23) for the release of the pawl (25) connected to the latter by a cable (24) and placed in the vicinity of an operating handle (11) fastened on the free end of the support cradle.

6. A container according to claim 5, characterized by the fact that it is provided with means for locking the support cradle in horizontal position on the frame.

7. A container according to claim 6, characterized by the fact that the frame (4) comprises two substantially parallel rails between which there is articulated the support cradle, which comprises, on each of its sides, a U-iron (16) open in the direction towards the respective rail (4a, 4b) of the frame, in order to surround it in the horizontal position of the support cradle, and the means for the locking of the latter consist of pins (17) each intended to retain a respective U-iron astride on the corresponding rail.

8. A container according to claim 7, characterized by the fact that its support cradle comprises, at at least one of its ends, a releasable clamping grip (12) intended to cooperate with a protruding part of the load in order to lock the latter on said cradle.

9. A container according to claim 8, characterized by the fact that the support cradle (5) is provided with blocks (8) for the provisional immobilizing of the load.

10. A container according to claim 9, characterized by the fact that the height of the first encasing element (1) is definitely less than the height of the second encasing element (2).

## Patentansprüche

1. Transportcontainer, insbesondere für den Transport von mit Vorsicht zu handhabenden Ladungen wie etwa Schleudersitzen für Luftfahrzeuge, welcher Container zwei Schalenelemente (1, 2) aufweist, die zur Bildung des Stauraums für die zu transportierende Ladung aufeinander aufsetzbar sind, dadurch gekennzeichnet, daß er im Inneren des Stauraumes wenigstens einen Träger (5) zur Aufnahme der Ladung aufweist, der mit einem Ende gelenkig an einem fest mit der Basis eines ersten Schalenelements (1) verbundenen Rahmen (4) befestigt ist, damit er nach dem Abnehmen des zweiten Schalenelements (2) zwischen einer flachliegenden Position auf dem Rahmen und einer oberhalb desselben aufgerichteten Position bewegt werden kann, wobei außerdem Mittel zur Fixierung des Aufnahme-Trägers in der aufgerichteten Position vorgesehen sind.

2. Container nach Anspruch 1, dadurch gekennzeichnet daß die Fixiermittel wenigstens eine zusammenklappbare und verriegelbare Stütze (9) umfassen, die einerseits an den Rahmen und andererseits an einem von dem Gelenk-Ende des Aufnahme-Trägers (5) entfernten Punkt an diesen Träger angelenkt ist.

3. Container nach Anspruch 2, dadurch gekennzeichnet, daß außerdem zwei selbsttätig ausfahrbare Zylinder (10) vorgesehen sind, deren jeder zwischen dem Rahmen und einer jeweiligen Flanke des Aufnahme-Trägers in der Nähe des Gelenk-Endes des letzteren eingefügt ist.

4. Container nach einem der Ansprüche 1 bis 3, dadurch gekennzeichnet, daß an dem Rahmen ein gezahnter Sektor (26) vorgesehen ist, der auf das Gelenk (6) zwischen Rahmen und Träger zentriert ist und mit einer an dem Träger montierten auskuppelbaren Klinke (25) zusammenwirkt.

5. Container nach Anspruch 4, dadurch gekennzeichnet, daß der Aufnahme-Träger (5) einen beweglichen Griff (23) zum Auskuppeln der Klinke (25) aufweist, der mit dieser durch ein Kabel (24) verbunden und in der Nähe eines Betätigungsgriffes (11) angeordnet ist, der am freien Ende des Aufnahme-Trägers befestigt ist.

6. Container nach einem der Ansprüche 1 bis 5, dadurch gekennzeichnet, daß er mit Mitteln zur Verriegelung des Aufnahme-Trägers in der flachgelegten Position an dem Rahmen versehen ist.

7. Container nach Anspruch 6, dadurch gekennzeichnet, daß der Rahmen (4) zwei im wesentlichen parallele Schienen (4) aufweist, zwischen denen gelenkig der Aufnahme-Träger gehalten ist, der an jeder seiner Flanken ein U-Eisen (16) aufweist, das in Richtung auf eine entsprechende Schiene (4a, 4b) des Rahmens offen ist, um diese in der flachgelegten Position des Aufnahme-Trägers zu übergreifen, und daß die Mittel zur Verriegelung des letzteren durch Splinte (17) gebildet werden, die jeweils dazu bestimmt sind, ein jeweiliges U-Eisen auf der entsprechenden Schiene aufsitzend zu halten.

8. Container nach einem der Ansprüche 1 bis 7, dadurch gekennzeichnet, daß sein Aufnahme-Träger an wenigstens einem seiner Enden eine lösbare Spannklaue (12) aufweist, die dazu bestimmt ist, mit einem vorspringenden Teil der Ladung zusammenzuwirken, um diese letztere auf dem Träger zu fixieren.

9. Container nach einem der Ansprüche 1 bis 8, dadurch gekennzeichnet, daß der Aufnahme-Träger (5) mit Nasen (8) zur provisorischen Fixierung der Ladung versehen ist.

10. Container nach einem der Ansprüche 1 bis 9, dadurch gekennzeichnet, daß die Höhe des ersten Schalenelements (1) deutlich kleiner ist als die des zweiten Schalenelements (2).
